# EUROPÄISCHE PATENTSCHRIFT

(11) **EP 0 856 075 B1**
(45) Veröffentlichungstag und Bekanntmachung des Hinweises auf die Patenterteilung: **18.08.1999**
(21) Anmeldenummer: 96925715.3
(22) Anmeldetag: 11.07.1996
(51) Int. Cl.: D06B 5/12, D06M 23/10, D06P 1/00

(54) **VERFAHREN UND VORRICHTUNG ZUR BEHANDLUNG VON TEXTILEN SUBSTRATEN MIT ÜBERKRITISCHEM FLUID**
PROCESS AND DEVICE FOR TREATING TEXTILE SUBSTRATES WITH SUPERCRITICAL FLUID
PROCEDE ET DISPOSITIF DE TRAITEMENT DE SUBSTRATS TEXTILES AVEC UN FLUIDE SURCRITIQUE

(30) Priorität: 16.10.1995 DE 19538479
(43) Veröffentlichungstag der Anmeldung: 05.08.1998
(73) Patentinhaber: Krupp Uhde GmbH, 44141 Dortmund (DE)
(72) Erfinder: SCHOLLMEYER, Eckhard, D-47906 Kempen (DE); BACH, Elke, D-47051 Duisburg (DE); CLEVE, Ernst, D-47608 Geldern (DE); BORK, Michael, D-44871 Dortmund (DE); STEINHAUER, Martin, D-58849 Herscheid (DE); KÖRNER, Jörg-Peter, D-58099 Hagen (DE)
(74) Vertreter: Patentanwälte Meinke, Dabringhaus und Partner
(86) Internationale Anmeldenummer: EP9603031
(87) Internationale Veröffentlichungsnummer: WO9714838

(56) Entgegenhaltungen:
- EP-A- 0 514 337
- DE-A- 4 206 956
- DE-A- 4 344 021

## Beschreibung

Die vorliegende Erfindung betrifft ein Verfahren der im Oberbegriff des Anspruches 1 angegebenen Gattung nach der EP-A-0 514 337, die ein Färbeverfahren mittels überkritischem CO₂ beschreibt. Dabei ist in dieser Literaturstelle auch beschrieben, das zu färbende Substrat zu erwärmen, und zwar zwischen 70 und 300°C, so daß sich die Färbetemperatur im wesentlichen nach der Temperatur dieses zu färbenden Substrates richtet. Dort wird somit eine mittelbare Beeinflussung des Färbefluides über die Temperatur des Färbesubstrates vorgenommen.

Üblicherweise werden textile Substrate, wie beispielsweise Fasern, Garne, Faser-Haufwerke, Web- oder Wirkwaren, im Rahmen ihrer Veredelung wiederholt im wäßrigen System behandelt, so zum Beispiel abgekocht, gebleicht, gefärbt, gewaschen od. dgl.

Labormäßig sind mittlerweile Verfahren entwickelt worden, bei denen textile Substrate zu unterschiedlichen Veredelungszwecken mit überkritischen Fluida, insbesondere mit überkritischem Kohlendioxid, behandelt werden. Hierbei sind diese Verfahren in den DE-OS'en 39 04 515, 40 04 111, 39 04 513, 39 06 724, 39 06 737, 39 06 735, 42 00 352 und 43 44 021 beschrieben. Diese labormäßig erarbeiteten Behandlungsverfahren in überkritischen Fluida erfordern Drücke, die in der Größenordnung zwischen 30 bar und 600 bar variieren.

Bei diesen Laborverfahren werden die textilen Substrate, bei denen es sich in der Regel um kleine Gewebeproben von der Größe von einigen Quadratzentimetern handelt, in entsprechende Laborautoklaven eingebracht und dort mit dem jeweiligen überkritischen Fluid benetzt. Diese Verfahren lassen sich jedoch nicht großtechnisch auf alle Behandlungsverfahren übertragen.

Bei den großtechnischen Behandlungsverfahren werden die textilen Substrate in einer für den effizienten Materialfluß im Textilveredelungsbetrieb geeigneten Aufmachung eingesetzt. Garn wird zur Garnspule aufgemacht veredelt, textile Warenbahnen kommen als Wickel aufgemacht zur Veredelung.

Geschieht ein Veredelungsschritt an der gewickelten Ware mittels einer Behandlung in einem überkritischen Fluid, so wird die Ware als Garnspule bzw. auf einem Baum als Wickel in einen zuvor geleerten Autoklaven eingebracht. Daraufhin wird der Autoklav druckdicht verschlossen, mit dem überkritischen Fluid befüllt und ein geeigneter Behandlungsdruck zwischen 30 bis 400 bar eingestellt. Das überkritische Fluid dringt dabei in die gewickelte Ware ein. Damit ein möglichst gleichmäßiges Behandlungsergebnis erzielt wird, d.h., daß allen Partien der gewickelten Ware beispielsweise die gleiche Farbintensität aufgeprägt wird -, sind wegen der dabei diffusionsgesteuert ablaufenden Stoffaustauschvorgänge vergleichsweise lange Einwirkungsdauern vorzusehen. Diese langen Einwirkungsdauern sind von Nachteil im großtechnisch arbeitenden Textilveredelungsbetrieb.

Um diesem Nachteil abzuhelfen, sind verschiedene Vorschläge bekannt geworden.

Die DE-OS 42 06 952 sieht vor, einen Kolben im Autoklaven hin- und herzubewegen und infolge dieser Bewegung die gewickelte Ware vom überkritischen Fluid an- und/oder durchströmen zu lassen. Der Autoklav muß deshalb mit einem größeren Druckbehältervolumen ausgestattet sein, als es für die alleinige Aufnahme der textilen Ware erforderlich ist, weil zusätzlicher Raum für die Kolbenbewegung vorzusehen ist. Dies ist nachteilig.

In der DE-OS 42 06 954 wird vorgeschlagen, den Autcklaven mit einer Umwälzpumpe zu versehen und die gewickelte Ware im Umlauf vom überkritischen Fluid an- und/oder durchströmen zu lassen. Damit ein gleichmäßiges Ergebnis der Behandlung erzielt wird, ist der Autoklav in mehrere parallel oder einzeln mit überkritischem Fluid beaufschlagbare Bereiche eingeteilt. Jeder Bereich nimmt eine Portion der gewickelten Ware auf. Damit nun bei allen Portionen ein gleichmäßiges Behandlungsergebnis erzielt wird, erhält jede Portion für sich allein den Gesamtumlauf und anschließend alle Portionen gleichzeitig in Parallelschaltung einen Umlauf anteil.

Nachteilig ist der komplexe Aufbau des Apparates und die zusätzliche für die Egalität erforderliche Einwirkungsdauer der Behandlung bei Parallelbeaufschlagung der Ware mit Fluid.

In der DE-OS 42 06 955 wird eine Vorrichtung zur Behandlung in überkritischen Fluida angegeben, bei der dem das textile Substrat aufnehmende Autoklaven mindestens zwei Pumpen zugeordnet sind. Das überkritische Fluid wird von der einen Pumpe durch den Autoklaven zirkuliert, die andere Pumpe dient zur Förderung des auch im unterkritischen Zustandes vorliegenden Behandlungsgases. Die eine Pumpe ist für hohe Förderraten ausgelegt, um ein gleichmäßiges Behandlungsergebnis bei textilen Substraten zu erzielen. Der Betrieb zweier unterschiedlicher Pumpen für nahezu die gleiche Aufgabe, wobei beide Pumpen nur kurze zeit gleichzeitig laufen, ist wirtschaftlich nicht optimal konzipiert.

In der DE-OS 42 06 956 wird eine vorrichtung zur Behandlung von textilen Substraten beschrieben, die mindestens zwei Autoklaven aufweist. Die Autoklaven können miteinander verbunden werden, damit zum Zwecke der Substratentnahme das Behandlungsfluid zuvor von dem einen Autoklaven in den neu mit zu behandelnden Substrat beschickten anderen Autoklaven umgepumpt werden kann. Es ist auch eine Zirkulation des überkritischen Fluids durch einen oder durch mehrere in Reihe geschaltete Autoklaven vorgesehen. Nachteilig ist, daß zum Zwecke der Anpassung an die Erfordernisse der großtechnisch betriebenen Textilveredelung eine Vielzahl von Autoklaven und ein zugehöriges Rohrleitungssystem komplexer Art erforderlich werden.

Um nun bei den vorstehend in der Beschreibungseinleitung genannten Verfahren, insbesondere bei denen, die in den Offenlegungsschriften DE-OS 39 04 515, DE-OS 40 04 111, DE-OS 39 04 513, DE-OS 39 06 724, DE-OS 39 06 737, DE-OS 39 06 735 und DE-OS 42 00 352 und DE-OS 43 44 021 beschrieben sind und die zum Inhalt der vorliegenden Anmeldung gehören, bessere Bedingungen für ihre großtechnische Nutzung, als bisher bekannt wurden, zu schaffen, sieht die vorliegende Erfindung vor, die Behandlung der textilen Substrate mit überkritischem Fluid bei Behandlungstemperaturen geschehen zu lassen, deren Werte sich aus funktionen der Behandlungszeit ergeben.

Das mit der vorliegenden Erfindung geschaffene Verfahren zur Behandlung von textilen Substraten mit überkritischem Fluid, insbesondere in Aufmachung von Garnspulen oder gewickelter Warenbahnen, wobei diese Aufmachungen im wesentlichen senkrecht zu ihrer Spul- bzw. Wickelachse vom überkritischen Fluid angeströmt und/oder durchströmt werden, sieht vcr, daß die Behandlungstemperatur während der Behandlungsdauer verschiedene Werte annimmt.

Bei der Behandlung von textilen Substraten mit überkritischem Fluid können unterschiedliche Ziele verfolgt werden. In der DE-OS 39 06 724 wird beispielsweise angegeben, zum Färben einen Dispersionsfarbstoff im überkritischen Fluid zu lösen und aus der dadurch entstandenen Flotte den Farbstoff auf das Substrat aufzuziehen, indem Flotte und Substrat in kontakt gebracht werden. Dieser Kontakt geschieht in einem Autoklaven, in dem die Flotte weitgehend stagniert. Die Behandlungsdauer für die Färbung der Gewebeprobe beträgt 10 Minuten.

Wird die Gewebeprobe mit dem erfindungsgemäßen Verfahren gefärbt, so wird sie von der Flotte durchströmt. Die Flotte wird dazu im Umlauf geführt. Die Flotte durchströmt die Gewebeprobe und tritt aus dem Behandlungsautoklaven aus. Bevor die Flotte erneut in den Behandlungsautoklaven eingeleitet wird, durchströmt sie im Sättiger eine Schüttung des pulverförmig eingesetzten Dispersionsfarbstoffes. Die Flotte ist dadurch, wenn sie erneut die Gewebeprobe durchströmt, bis zur Sättigung mit dem Dispersionsfarbstoff beladen.

Im erfindungsgemäßen Verfahren nimmt nun während der Behandlungsdauer, in welchem Zeitraum die Flotte kontinuierlich zirkuliert, die Behandlungstemperatur, d.h. die Temperatur der die Gewebeprobe durchströmenden Flotte, verschiedene Werte an. Die Temperatur der umlaufenden Flotte kann entweder erhöht oder erniedrigt werden. Dazu wird der Flotte in einem Wärmeaustauscher entweder Wärme zugeführt oder es wird ihr Wärme entzogen. Wird bei der Behandlung des textilen Substrates beispielsweise Dispersionsfarbstoff aufgezogen, so wird der Flotte Wärme zugeführt und die Behandlungstemperatur nimmt höhere Werte an. Beim erfindungsgemäßen Färben wird zweckmäßigerweise der Flotte die Wärme vor ihrer Beladung mit Dispersionsfarbstoff zugeführt. Dazu wird die aus dem Behandlungsautoklav austretende Flotte zuerst durch den Wärmeaustauscher geführt und anschließend durch den Sättiger geführt.

Beim verwendeten überkritischen Fluid, in diesem Beispiel ist dies Kohlendioxid CO₂, kann mit zunehmender Temperatur mehr Dispersionsfarbstoff in Lösung gehen. Infolge des erfindungsgemäßen Flotteumlaufes, bei dem die Flotte zuerst erwärmt und dann mit Dispersionsfarbstoff beladen wird, wird die Gewebeprobe mit einer Flotte von ständig zunehmender Farbkonzentration beaufschlagt. Die ansteigende Konzentrationsdifferenz zwischen farbstoffaufnehmenden textilen Substraten und farbstoffabgebender Flotte begünstigt die Kinetik der Diffusionsvorgänge beim Färben. Die Behandlungsdauer wird im Vergleich zum isothermen Färben kürzer.

Überraschenderweise verkürzt infolge der erfindungsgemäßen Führung der Behandlungstemperatur ein weiterer Effekt die Behandlungszeit beim Färben zusätzlich. Das Aufziehen des Farbstoffes ist ein endothermer Vorgang, der an der Faseroberfläche abläuft. Die Flotte, deren Temperatur während der Behandlungsdauer mit steigenden Werten das textile Substrat beaufschlagt, stellt also im Überschuß Wärme zur Beschleunigung des endothermen Aufziehens zur Verfügung.

Die Verkürzung der Behandlungsdauer durch das erfindungsgemäße verfahren ist von wirtschaftlicher Bedeutung. Der großtechnische Textilveredelungsbetrieb legt darauf Wert, eine möglichst große Anzahl von Garnspulen pro Schicht im Autoklav zu färben. Der Autoklav wird chargenweise betrieben. Für jede Charge durchläuft der Autoklav einen Betriebszyklus, der aus den sequentiell ablaufenden Operationen Beschicken mit textiler Ware, z.B. Garnspulen, Befüllen mit überkritischem Fluid bis zum Behandlungsdruck, Behandeln mittels Flotteumlauf, Ablassen des überkritischen Fluids, Entnehmen der textilen Ware, besteht.

Wenn, wie üblich, mechanisierte Beschickungseinrichtungen eingesetzt werden, beansprucht die Behandlungsdauer den überwiegenden Teil der Zykluszeit. Es ist leicht ersichtlich, daß die im Labor ermittelte Färbedauer von 10 Minuten für eine Gewebeprobe den wirtschaftlichen Anforderungen der großtechnischen Textilveredelung nicht genügen kann.

Bei Einsatz des erfindungsgemäßen Verfahrens in der Garnfärberei jedoch werden übliche Kreuzspulen von 1.500 g Warengewicht innerhalb einer Behandlungsdauer von nur 60 Minuten egal durchgefärbt.

Dabei wird die Spule von innen nach außen von dem überkritischen CO₂ durchströmt. Die durchströmte Substratschichtdicke ist dabei rund eintausendmal dicker als bei der Gewebeprobe. Die vergleichsweise hohe Verkürzung der Behandlungsdauer gegenüber der Behandlung mit stagnierendem Fluid und konstanter Behandlungstemperatur ist augenfällig.

Bei den üblichen wässrigen Färbeverfahren werden die gefärbten Garnspulen in mehreren Schritten getrocknet, zuerst vorgetrocknet durch Zentrifugieren, danach endgetrocknet in einem Hochfrequenztrockner. Die Arbeitsgänge sind bei dem Verfahren der vorliegenden Erfindung nicht erforderlich, weil das Rest-CO₂ aus der Garnspule ohne weiteres rückstandsfrei und ohne Umweltbeeinträchtigungen verfliegt.

Bei dem erfindungsgemäßen Verfahren zur Behandlung von textilen Substraten, insbesondere in Aufmachung von Garnspulen oder gewickelter Warenbahnen, mit überkritischem Fluid, wobei diese Aufmachung im wesentlichen senkrecht zu ihrer Spul- bzw. Wickelachse vom überkritischen Fluid angeströmt und/oder durchströmt werden, und wobei die Behandlungstemperatur während der Behandlungsdauer verschiedene Werte annimmt, ist in Ausgestaltung vorgesehen, daß die verschiedenen Werte der Behandlungstemperatur durch mindestens eine Funktion der Behandlungszeit angegeben werden.

Bei dem zuvor genannten Färben von Garnspulen hat es sich gezeigt, daß die Behandlungstemperatur linear während der Behandlungszeit angehoben werden muß, um eine über die Spulenkörper egale Farbverteilung bei kurzer Behandlungsdauer zu erzielen.

Der Koeffizient des Temperaturanstieges kann Werte von 0,5°C/min bis zu 2°C/min annehmen. Die Behandlungsdauer läßt sich jedoch nicht beliebig durch größere Temperaturanstiegskoeffizienten verkürzen, weil die begrenzte Temperaturleitfähigkeit des Substrates hier eine Schranke bildet. Sofern der Temperaturgradient im Substrat zu steil wird, entfärbt sich das Substrat.

Um diesem Mechanismus entgegenzuwirken, wird nach Ablauf des ersten Drittels der Behandlungsdauer ein geringerer Temperaturanstiegskoeffizient als im ersten Drittel der Behandlungsdauer vorgegeben. So wird im ersten Drittel der Behandlungsdauer der Temperaturanstieg bei mindestens 1°C/min geführt, danach aber nur noch mit einem Anstieg 0,5°C/min die Behandlung zu Ende geführt.

Bei einer weiteren Ausgestaltung des erfindungsgemäßen Verfahrens zur Behandlung von textilen Substraten, insbesondere in Aufmachung von Garnspulen oder gewickelter Warenbahnen, mit überkritischem Fluid, wobei diese Aufmachungen in wesentlichen senkrecht zu ihrer Spul- bzw. Wickelachse vom überkritischen Fluid angeströmt und/oder durchströmt werden, und wobei die Behandlungstemperatur während der Behandlungsdauer verschiedene Werte annimmt, ist vorgesehen, daß während der Behandlungsdauer die Werte der Behandlungstemperatur durch mindestens zwei Funktionen der Behandlungszeit angegeben werden und das überkritische Fluid zum Zeitpunkt des Wirksamwerdens der Folgefunktion anders konditioniert wird.

Mit dieser Ausgestaltung der erfindungsgemäßen Verfahrensweise ist eine besonders wirtschaftliche Anpassung an die Gegebenheiten der großtechnischen Textilveredelung möglich. Hierbei wird während des Regimes der ersten Funktion der Behandlungszeit eine Vorbehandlung der textilen Substrate vorgenommen. Diese Vorbehandlung kann auf die Entfernung von Schlichten oder Präparationen bzw. auf die Entfernung von Verschmutzungen und Wollfetten gerichtet sein. Diese Vorbehandlung kann beispielsweise, wie in DE-OS 40 04 111 beschrieben, vorgenommen werden, allerdings entsprechend an die erfindungsgemäße Fluidzirkulation angepaßt ablaufen. Dabei wäre als Reinigungsfluid CO₂ einzusetzen.

Das durch die Vorbehandlung mit den von dem Substrat entfernten Stoffen beladene CO₂ wird in einem Abscheider regeneriert. Im Abscheider liegt das CO₂ unterkritisch und gasförmig vor. Die Beladung füllt aus und wird mechanisch vom CO₂-Gas getrennt. Das derart regenerierte CO₂ wird in die Vorbehandlung zurückgeführt. Wegen der CO₂-Rezirkulation erfolgt die Vorbehandlung praktisch ohne Verlust an Waschfluid. Am Ende der Vorbehandlungszeit wird die Behandlung unter dem Regime der folgefunktion weitergeführt. Die Folgefunktion sieht zum Beispiel vor, daß das textile Substrat bei linear ansteigender Temperatur im verbleibenden Behandlungszeitrestintervall von 90°C auf 120°C zu färben ist.

Das zuvor als Waschfluid benutzte CO₂ wird nun, da es stets in regenerierter Form, also unbeladen, zwischengesammelt vorgehalten wird, unter dem Regime der Folgefunktion erneut eingesetzt, allerdings in anderer Konditionierung. Die andere Konditionierung wird nun erfindungsgemäß so gestaltet, daß das überkritische CO₂ mit Farbstoff beladen wird und in dieser Kondition zum Färben eingesetzt wird. zweckmäßigerweise wird das Behandlungsfluid im Kreis geführt, um die Konditionierung vor jedem neuen Behandlungsdurchlauf auf dem ursprünglich aufgeprägten Niveau zu halten. Beim Färben geht der Farbstoff aus der überkritischen Flotte auf das zu färbende textile Substrat über. Dadurch verarmt die Flotte an Farbstoff. Deshalb wird das von Farbstoff abgereicherte Fluid wieder mit frischem Farbstoff beladen.

Dies geschieht erfindungsgemäß dadurch, daß das Fluid kontinuierlich im Umlauf geführt wird und durch ständigen Kontakt mit pulverförmigem Farbstoff aufgesättigt wird. Somit wird das ursprüngliche Niveau der Konditionierung während des Regimes der Folgefunktion stetig beibehalten.

Das erfindungsgemäße Verfahren wird vorzugsweise für solche Anwendungen eingesetzt, bei denen das zu behandelnde textile Substrat aus Synthesefasern und/oder Mischungen aus verschiedenen Synthesefasern und/oder Mischungen aus Synthesefasern und Naturfasern besteht.

Solche Synthesefasern werden beispielsweise aus Polyester, Polyamid, Polyimid, Polypropylen, Polyaethylen od. dgl. hergestellt. Von den Naturfasern sind Seide, Baumwolle, Wolle, Leinen u. dgl. zur Behandlung geeignet.

Bei dem erfindungsgemäßen Verfahren können unterschiedliche Stoffe als überkritisches Fluid benutzt werden. Geeignet sind z.B. Alkane, insbesondere Ethan, Propan oder Pentan, Ammoniak, Kohlendioxid, Kohlenmonoxid, Distickstoffoxid, welche jeweils allein oder in Mischung eingesetzt werden.

Um die Eigenschaften des überkritischen Fluids zu verbessern, beispielsweise um seine Polarität zu erhöhen, können ihm zusätzlich polare Substanzen beigemischt werden. Dabei kommen unter anderem Wasser, Alkohol und/oder Salze als Moderator in Frage. Bevorzugt kommt als überkritisches Fluid das Kohlendioxid zum Einsatz, da es nicht brennbar ist und auch ohne besondere Vorsichtsmaßnahmen in die Atmosphäre abgegeben werden kann.

In weiterer Ausgestaltung der Erfindung wird eine Vorrichtung zur Durchführung des erfindungsgemäßen Verfahrens zur Behandlung eines textilen Substrates angegeben, die mit
- mindestens einem Färbeautoklav zur Aufnahme des textilen Substrates,
- mindestens einem Sättiger zur Beladung des Fluids mit dem Wirkstoff (13),
- mindestens einem Abscheider,
- einem Wärmeaustauscher mit zugeordneter Heiz- und Kühleinrichtung,
- einem Kondensator mit zugeordneter Kühleinrichtung und einem dem Kondensator nachgeschalteten Sammler,
- einer Pumpe (2)
ausgestattet ist und welche vorstehend genannten Einrichtungen mit Rohrleitungen und Armaturen derart verbunden sind, daß einerseits ein Fluid im Umlauf über den Färbeautoklav, die Pumpe, den Wärmeaustauscher, den Sättiger oder andererseits im Umlauf über den Färbeautoklav, das Entspannungsventil, den Kondensator, den Sammler und die Pumpe geführt werden kann, und wobei erfindungsgemäß vorgesehen ist, daß mittels einer Prozeßsteuerung während der Behandlungsdauer des textilen Substrates veränderliche Werte der Behandlungstemperatur dem umlaufenden Fluid aufgeprägt werden.

Die Prozeßsteuerung wird üblicherweise in Mikroprozessortechnik ausgeführt. Sie ist über Verstärkerbaugruppen mit den Sensoren und Aktoren, die die Prozeßparameter erfassen bzw. auf sie einwirken, verbunden.

Bei Verwendung der verfügbaren Leittechnik ist es möglich, das Verfahren weitgehend automatisiert ablaufen zu lassen. Darüber hinaus gestattet es die verfügbara Leittechnik, den Prozeß in die automatisierten Betriebsabläufe des Textilveredelungsbetriebes einzubinden.

Der Färbeautoklav selbst besitzt Einrichtungen zur Führung des Fluids durch die Garnspulen, die das Fluid von innen her durch die perforierte Spulenhülse in den Wickelkörper eintreten lassen. Je nach Bedarf wird der Färbeautoklav so gestaltet, daß er Garnspulensäulen und/oder auf dem Baum gewickelte flächige Ware aufnehmen kann.

Spulensäulen mit flexiblen Hülsen können vorgespannt behandelt werden. Zwischen den Hülsenenden der einzelnen Spulen in der Säule sind Dichtungen eingelegt, die bei nicht vorgespannten Säulen Kurzschlußströmungen des Fluids außen an den Wicklungen vorbei blockieren.

Der Färbeautoklav wird mit einem mechanisierten Deckelverschluß ausgerüstet. Bis zu Autoklav-Innendurchmessern um einen Meter sind Klammerschnellverschlüsse in Hochdruckausführung für 300 bar bis 700 bar industriell verfügbar. Für größere Durchmesser werden mechanisierte Segmentringverschlüsse eingesetzt. Diese sind auch für alle hier in Betracht kommenden Behandlungsdrucke geeignet.

Überkritische Fluide werden mit Kolbenpumpen und mit Kreiselpumpen gefördert, die speziell für diesen Einsatz ausgebildet sind. Beim vorliegenden verfahren wird eine Kreiselpumpe eingesetzt, wenn beispielsweise mehrere lange Spulensäulen gleichzeitig zu behandeln sind.

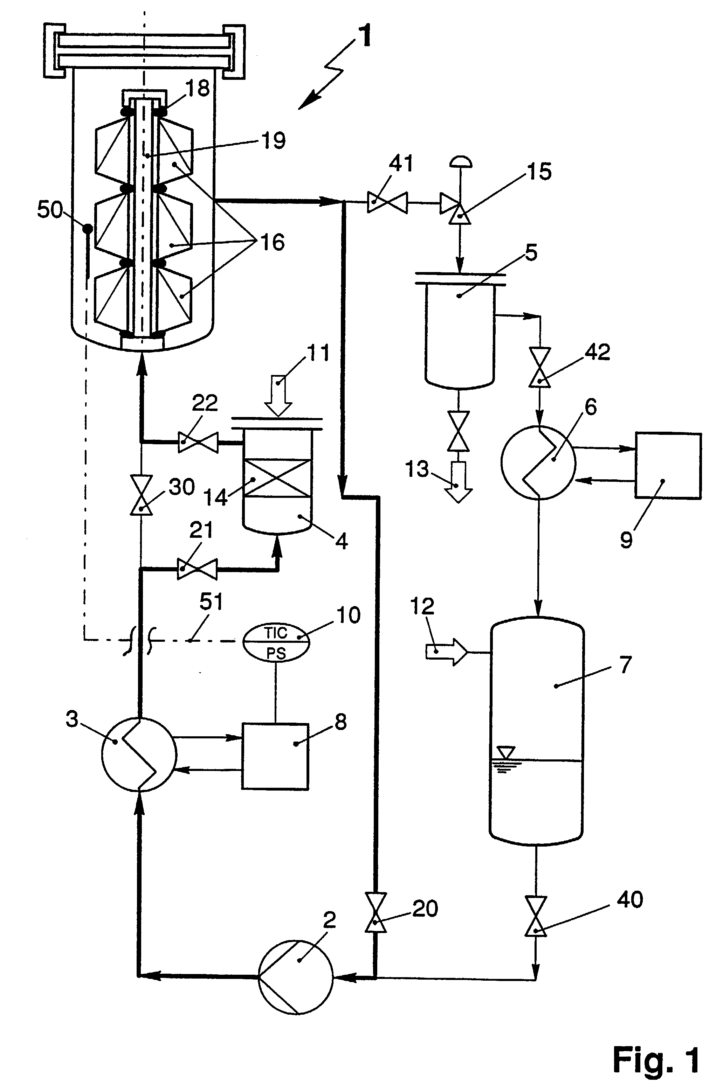

Das erfindungsgemäße Verfahren und die erfindungsgemäße Vorrichtung wird anhand eines Ausführungsbeispieles näher erläutert. Hierzu zeigt die Fig. 1 ein Verfahrensfließbild, demgemäß die Vorrichtung entsprechend der vorliegenden Erfindung gestaltet wird.

Mit dem erfindungsgemäßen Verfahren werden textile Substrate, wie beispielsweise Fasern, Garne, Flächengebilde, Vliese, Gelege od. dgl., behandelt. Beispielsweise werden sie so gefärbt, daß der Farbstoff gleichmäßig auf den textilen Substraten aufgebracht wird und diese egal färbt. Dieses Verfahren kann auch so durchgeführt werden, daß eine wässrige Vorwäsche zur Entfernung von Spinnpräparationen, Spulölen und anderen hydrophoben Substanzen, die bei der Färbung mit überkritischen Fluiden stören, entfällt.

Das erfindungsgemäße Verfahren dient im wesentlichen zur Behandlung von Synthesefasern und deren Mischungen untereinander und mit Naturfasern. Zur Durchführung des Verfahrens werden als überkritische Fluide Alkane, insbesondere Ethan, Propan oder Pentan, Ammoniak, Kohlendioxid, Kohlenmonoxid, Distickstoffoxid jeweils allein oder in Mischung eingesetzt. Dem überkritischen Fluid kann zusätzlich als Moderator eine polare Verbindung, wie z.B. Wasser, Alkohol und/oder Salze, zugegeben werden.

Am Beispiel des Färbens von Polyestergarn wird eine Verfahrensausgestaltung erläutert. Zu färbendes Garn wird als Kreuzspulen ausgemacht in den Färbeautoklaven 1 gefüllt. Farbstoff 11, dessen Menge etwa 0,5 % des eingesetzten Warengewichtes beträgt, wird in den Farbbehälterkorb 14 des Sättigers 4 gegeben.

Zur extraktiven Reinigung, die bei 280 bar und 120°C durchgeführt wird, wird CO₂ aus dem Sammler 7 mit der Pumpe 2 über den Wärmeaustauscher 3 in den Färbeautoklaven 1 gefördert und durchströmt die Garnspulen 16 von innen nach außen. Hierbei wird der Sättiger 4 nicht beaufschlagt, er wird über Ventil 30 umgangen. Auf dem Garn befindliche Verunreinigungen, wie Spinnpräparationen und Spulöle, lösen sich im CO₂ und werden über ein zur Druckregelung vorgesehenes Entspannungsventil 15 zum Abscheider 5 transportiert. Nach der Druckabsenkung fallen die Verunreinigungen im Abscheider 5 aus dem darin im unterkritischen Zustand befindlichen CO₂-Gas aus und werden dort gesammelt. Das regenerierte CO₂ strömt zurück in den Sammler 7.

Zu der an den Reinigungsschritt anschließenden Färbung wird CO₂ mit Pumpe 2 durch den Wärmeaustauscher 3 und den Sättiger 4, in dem sich der Färbestoff 11 im CO₂ löst, in den Färbeautoklaven 1 gefördert.

Das Garn im Färbeautoklaven 1 wird-gefärbt, während das CO₂ aus dem Färbeautoklaven 1 mit Hilfe der Pumpe 2 im Kreislauf zurück in den Färbeautoklaven 1 umgewälzt wird.

Die Färbung wird bei konstant gehaltenem Druck von 280 bar und mit steigender Behandlungstemperatur, die über der Behandlungszeit linear von 90°C auf 120°C erhöht wird, durchgeführt.

Während der Behandlungsdauer wird das CO₂ ständig durch den Sättiger 4 geleitet. Das CO₂ wird dadurch gleichfalls bei steigenden Temperaturen mit Farbstoff 11 beladen, der aus dem Farbbehälterkorb 14 heraus in das CO₂ in Lösung geht. Da viel mehr Farbstoff 11 im Farbbehälterkorb 14 vorgehalten wird, als zur egalen Färbung der Garnspulen 16 benötigt wird, ist das CO₂ nach dem Sättiger 4 stets bis zu seiner Sättigung mit Farbstoff 11 beladen. Nach einer Behandlungsdauer von 1 h ist das Garn egal gefärbt und wird dem Färbeautoklav 1 entnommen. Die Garnspulen sind trocken und versandfertig.

In der Fig. 1 ist die Funktion der Prozeßsteuerung lediglich mit ihrer erfindungsgemäßen Hauptfunktion dargestellt. Die Prozeßsteuerung 10 mißt mit dem Temperaturmeßgerät 50 die aktuelle Behandlungstemperatur im Färbeautoklaven 1.

Bei Abweichung von dem Sollwert wirkt die Prozeßsteuerung 10 auf die Heiz- und Kühleinrichtung 8 ein und regelt die Abweichung aus. Die Sollwerte werden von der Prozeßsteuerung 10 entsprechend den zuvor eingestellten/eingegebenen und speicherprogrammiert vorgehaltenen Zeitfunktionen eingestellt. Weitere Abläufe, wie die Druckregelung usw., werden ebenfalls mittels der Prozeßsteuerung 10 automatisiert, sind aber der Übersichtlichkeit halber nicht in Fig. 1 dargestellt. Zur weiteren Erläuterung des Verfahrens und der Vorrichtung ist die nachstehende Bezugszeichenliste angegeben.

### Bezugszeichenliste

- 1: Färbeautoklav
- 2: Pumpe
- 3: Wärmeaustauscher
- 4: Sättiger
- 5: Abscheider
- 6: Kondensator
- 7: Sammler
- 8: Heiz- und Kühleinrichtung
- 9: Kühleinrichtung
- 10: Prozeßsteuerung
- 11: Wirkstoff/Farbstoff
- 12: Fluid
- 13: Reststoff
- 14: Farbbehälterkorb
- 15: Entspannungsventil
- 16: Garnspule
- 17 18: Dichtung
- 19: Trägerrohr
- 20: Umlaufventil
- 21: Ventil
- 22: Ventil
- 30: Umgangsventil
- 40: Ventil
- 41: Ventil
- 42: Ventil
- 50: Temperaturmeßgerät
- 51: Meßleitung

## Patentansprüche

1. Verfahren zum Färben von textilen Substraten, insbesondere in Aufmachung von Garnspulen oder gewickelter Warenbahnen, mit überkritischem Fluid mit variierender Behandlungstemperatur, wobei diese Aufmachungen im wesentlichen senkrecht zu ihrer Spul- bzw. Wickelachse vom überkritischen Fluid angeströmt und/oder durchströmt werden,
dadurch gekennzeichnet,
daß das Fluid im Umlauf geführt und in einem Sättiger ständig mit Farbstoff aufgesättigt wird, wobei die Behandlungstemperatur während der Behandlungsdauer durch Senkung oder Anhebung verschiedene Werte annimmt.

2. Verfahren nach Anspruch 1,
dadurch gekennzeichnet,
daß die verschiedenen Werte der Behandlungstemperatur durch mindestens eine Funktion der Behandlungszeit angegeben werden.

3. Verfahren nach Anspruch 1 oder 2,
dadurch gekennzeichnet,
daß während der Behandlungsdauer die Werte der Behandlungstemperatur durch mindestens zwei Funktionen der Behandlungszeit angegeben werden und das überkritische Fluid zum Zeitpunkt des Wirksamwerdens der Folgefunktion anders konditioniert wird.

4. Vorrichtung zur Durchführung des Verfahrens zur Färbung eines textilen Substrates gemäß Anspruch 1 mit
- mindestens einem Färbeautoklav (1) zur Aufnahme des textilen Substrates,
- mindestens einem Sättiger (4) zur Beladung des Fluids mit dem Wirkstoff (11),
- mindestens einem Abscheider (5),
- einem Wärmeaustauscher (3) mit zugeordneter Heizkühleinrichtung (8),
- einem Kondensator (6) mit zugeordneter Kühleinrichtung (9) und einen dem Kondensator (6) nachgeschalteten Sammler (7),
- einer Pumpe (2)
und vorgenannte Ausrüstungen mit Rohrleitungen und Armaturen derart verbunden, daß einerseits ein Fluid im Umlauf über den Fäbeautoklav (1), die Pumpe (2), den Wärmetauscher (3) und den Sättiger (4) oder anderseits im Umlauf über den Färbeautoklav (1), ein Entspannungsventil (15), den Kondensator (6) und den Sammler (7) geführt werden kann,
dadurch gekennzeichnet,
daß mittels der Prozeßsteuerung (10) während der Behandlungsdauer des textilen Substrates veränderliche, nämlich sinkende oder steigende Werte der Behandlungstemperatur dem umlaufenden Fluid aufgeprägt werden.

## Claims

1. A process for dyeing textile substrates, in particular in the production of yarn packages or wound material webs, with above-critical fluid with a varying treatment temperature, wherein said products are subjected to an afflux flow and/or a through-flow of the above-critical fluid substantially perpendicularly to their package or winding axis. characterised in that the fluid is circulated and is continuously saturated with dyestuff in a saturator, wherein the treatment temperature assumes various values by falling or rising during the treatment period.

2. A process according to claim 1 characterised in that the various values of the treatment temperature are specified by at least one function of the treatment time.

3. A process according to claim 1 or claim 2 characterised in that during the treatment period the values of the treatment temperature are specified by at least two functions of the treatment time and the above-critical fluid is conditioned differently at the time of the consequential function becoming operative.

4. Apparatus for carrying out the process for dyeing a textile substrate according to claim 1 comprising:
- at least one dyeing autoclave (1) for receiving the textile substrate,
- at least one saturator (4) for charging the fluid with the active substance (11),
- at least one separator (5),
- a heat exchanger (3) with associated heating-cooling device (8),
- a condenser (6) with associated cooling device (9) and a collector (7) arranged downstream of the condenser (6) and
- a pump (2)
and the above-identified items of equipment are connected to pipelines and fittings in such a way that on the one hand a fluid can be circulated by way of the dyeing autoclave (1), the pump (2), the heat exchanger (3) and the saturator (4) or on the other hand by way of the dyeing autoclave (1), a relief valve (15), the condenser (6) and the collector (7),
characterised in that variable, namely falling or rising values in respect of the treatment temperature are imposed on the circulating fluid by means of the process control (10) during the textile substrate treatment period.

## Revendications

1. Procédé de teinture de substrats textiles, en particulier en présentation de bobines de filé ou de nappes de tissu enroulées, avec un fluide surcritique avec une température de traitement variable, ces présentations étant balayées et/ou traversées par le fluide surcritique sensiblement perpendiculairement à leur axe de bobine ou d'enroulement, caractérisé en ce que le fluide est mis en circulation et est constamment saturé de colorant dans un saturateur, la température de traitement revêtant différentes valeurs par augmentation ou abaissement pendant la durée du traitement.

2. Procédé selon la revendication 1 caractérisé en ce que les différentes valeurs de la température de traitement sont données par au moins une fonction de la durée du traitement.

3. Procédé selon la revendication 1 ou 2 caractérisé en ce que, pendant la durée du traitement, les valeurs de la température de traitement sont données par au moins deux fonctions de la durée du traitement et le fluide surcritique est conditionné différemment au moment de l'entrée en action de la fonction consécutive.

4. Dispositif pour la mise en oeuvre du procédé de teinture d'un substrat textile selon la revendication 1 comprenant
- au moins un autoclave de teinture (1) pour recevoir le substrat textile,
- au moins un saturateur (4) pour charger le fluide de substance active (11),
- au moins un séparateur (5),
- un échangeur de chaleur (3) avec un dispositif de chauffage-refroidissement (8) associé,
- un condenseur (6) avec un dispositif de refroidissement (9) associé et un collecteur (7) branché en aval du condenseur (6),
- une pompe (2)
et les équipements précités étant reliés par des conduites tubulaires et des accessoires de telle manière qu'un fluide peut être mis en circulation d'une part par l'intermédiaire de l'autoclave de teinture (1), de la pompe (2), de l'échangeur de chaleur (3) et du saturateur (4) ou d'autre part par l'intermédiaire de l'autoclave de teinture (1), d'une vanne de détente (15), du condenseur (6) et du collecteur (7), caractérisé en ce qu'à l'aide de la commande de procédé (10), des valeurs variables, c'est à dire décroissantes ou croissantes, de la température de traitement peuvent être appliquées au fluide circulant pendant la durée du traitement du substrat textile.
